(19) Europäisches Patentamt
European Patent Office
Office européen des brevets

(11) **EP 3 657 216 A1**

(12) **EUROPEAN PATENT APPLICATION**
published in accordance with Art. 153(4) EPC

(43) Date of publication:
**27.05.2020 Bulletin 2020/22**

(51) Int Cl.:
*G01S 17/10* (2020.01)     *G01C 3/06* (2006.01)
*G01S 7/481* (2006.01)

(21) Application number: **18835016.9**

(22) Date of filing: **10.07.2018**

(86) International application number:
**PCT/JP2018/026031**

(87) International publication number:
**WO 2019/017244 (24.01.2019 Gazette 2019/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.07.2017 JP 2017138813**

(71) Applicant: **Pioneer Corporation**
**Tokyo 113-0021 (JP)**

(72) Inventors:
• **SATO, Makoto**
**Kawagoe-shi**
**Saitama 350-8555 (JP)**
• **OCHIAI, Takanori**
**Kawagoe-shi**
**Saitama 350-8555 (JP)**
• **YANAGISAWA, Takuma**
**Kawagoe-shi**
**Saitama 350-8555 (JP)**
• **OGASAWARA, Masakazu**
**Kawagoe-shi**
**Saitama 350-8555 (JP)**
• **IZUTA, Ryo**
**Kawagoe-shi**
**Saitama 350-8555 (JP)**

(74) Representative: **Grünecker Patent- und**
**Rechtsanwälte**
**PartG mbB**
**Leopoldstraße 4**
**80802 München (DE)**

(54) **OPTICAL DEVICE**

(57) An optical device (1) comprises a diffraction grating (5) that guides a laser light emitted from a light source (2) to a direction having an angle depending on the wavelength, and guides a reflection light resulting from the guided laser light having been reflected by an object (100) and ambient light to respective directions in angles depending on the wavelengths of these lights. The optical device (1) further comprises a light reception element (10) that receives the light guided by the diffraction grating (5). The reflection light of the laser light is incident on the diffraction grating (5) at the same angle as the angle at which the laser light has been guided by the diffraction grating (5), and is guided by the diffraction grating (5) at the same angle as the angle at which the laser light has been incident on the diffraction grating (5).

FIG.1

## Description

Technical Field

The present invention relates to an optical device that receives reflected light obtained by reflecting emitted light from an object.

Background Art

Conventionally, an apparatus for measuring a distance to an object on the basis of a round-trip time until the reflected light returns by irradiating the object by light has been put into practical use.

In this type of device, in order to separate reflected light used for distance measurement from ambient light such as sunlight, a bandpass filter that transmits only light having the wavelength of the irradiated light is used to improve S/N ratio (for example, refer to Patent Literature 1).

In addition, in this type of apparatus, there is a problem that a wavelength of a light emitting element that emits light for distance measurement is different from a wavelength assumed due to individual variation.

Prior Art Document

Patent Literature

Patent Literature 1: JP 2007-85832 A

Summary of Invention

Technical Problem

In the invention described in Patent Literature 1, in order to cope with the temperature variation of the light emitting element, the center wavelength of the light transmitted through the bandpass filter is adjusted so as to follow the wavelength of the light emitted from the light projecting unit estimated from the temperature of the semiconductor laser element that is a light emitting element.

However, in the invention described in Patent Literature 1, since the band pass filter is used, the wavelength to be passed needs to have a certain width in consideration of the variation of the wavelength of light due to individual variation, and there has been a limit to improving the separation accuracy of ambient light.

An example of the problem to be solved by the present invention is to improve the separation accuracy of ambient light other than the reflected light of the emitted light as described above.

Solution to Problem

For solving the problem above, according to a first aspect of the present invention, there is provided an optical device including:

> a light source that emits emitting light;
> an irradiation device that irradiates the emitted light toward a predetermined range;
> a light receiving unit that receives reflected light reflected from an object by the emitted light irradiated by the irradiation device; and
> a first optical member that guides the emitted light to the irradiation device and guides the reflected light to the light receiving unit by guiding incident light in a direction according to a wavelength thereof.

Brief Description of Drawings

> FIG. 1 is a schematic configuration diagram of an optical device according to a first embodiment of the present invention;
> FIG. 2 is an explanatory diagram showing an operation of a diffraction grating shown in FIG. 1;
> FIG. 3 is an explanatory diagram when ambient light is incident;
> FIG. 4 is an explanatory diagram when a wavelength variation occurs in the optical device shown in FIG. 1;
> FIG. 5 is a schematic configuration diagram of an optical device according to a second embodiment of the present invention; and
> FIG. 6 is an explanatory diagram when the wavelength of laser light is shifted in the optical device shown in FIG. 5.

Description of Embodiments

Hereinafter, an optical device according to an embodiment of the present invention will be described. Optical device according to one embodiment of the present invention includes: a light source that emits emitting light; an irradiation device that irradiates the emitted light toward a predetermined range; a light receiving unit that receives reflected light reflected from an object by the emitted light irradiated by the irradiation device; and a first optical member that guides the emitted light to the irradiation device and guides the reflected light to the light receiving unit by guiding incident light in a direction according to a wavelength thereof. In this way, by including the first optical member that guides the emitted light to the irradiation device and guides the reflected light to the light receiving unit by guiding incident light in a direction according to a wavelength thereof, it is possible to prevent an optical path in the optical device between the emitted light emitted from the optical device and the reflected light of the emitted light from changing with the wavelength. Therefore, even if there is a difference in the wavelength of the emitted light due to a temperature variation in the light emitting unit or individual variations, the reflected light can be guided to the light receiving unit by two optical parts. Therefore, the reflected light and the ambient light can be separated, and the separation accuracy can be improved.

Further, the first optical member may be disposed on the optical path of the emitted light from the light source to the irradiation device. In this way, it is possible to guide the reflected light to the light receiving unit by the optical element even if there is a difference in wavelength of the emitted light due to temperature variation and individual variation of the light emitting unit. Therefore, the reflected light and the ambient light can be separated, and the separation accuracy can be improved.

Further, the optical path through which the reflected light enters the first optical member and the optical path through which the emitted light is guided by the first optical member may be the same. In this way, it is possible to pass through one optical element at the time of light emission and light reception, so that the reflected light can be returned from the direction in which the emitted light is guided. Therefore, even if the wavelength of the light emitting unit changes, the light can be guided to the light receiving unit. Moreover, the number of components can be reduced by using one optical element.

Further, an optical device according to another embodiment of the present invention includes: a light source that emits emitting light; an irradiation device that irradiates the emitted light toward a predetermined range; a light receiving unit that receives reflected light reflected from an object by the emitted light irradiated by the irradiation device; a first optical member that guides the emitted light to the irradiation device by guiding incident light in a direction according to a wavelength thereof; and a second optical member that guides the reflected light reflected from the object to the light receiving unit by guiding the reflected light in a direction according to a wavelength thereof. In this way, even if the wavelength of the light emitting unit changes, the light can be guided to the light receiving unit.

Further, a distance measuring device having the optical device according to any one of first to fourth aspect of the present invention may measures a distance to the object based on a time required from emission of the emitted light to reception of the emitted light by the light receiving unit. In this way, in the distance measuring device, the reflected light can be reliably received, and the distance measurement accuracy can be improved.

(First Embodiment)

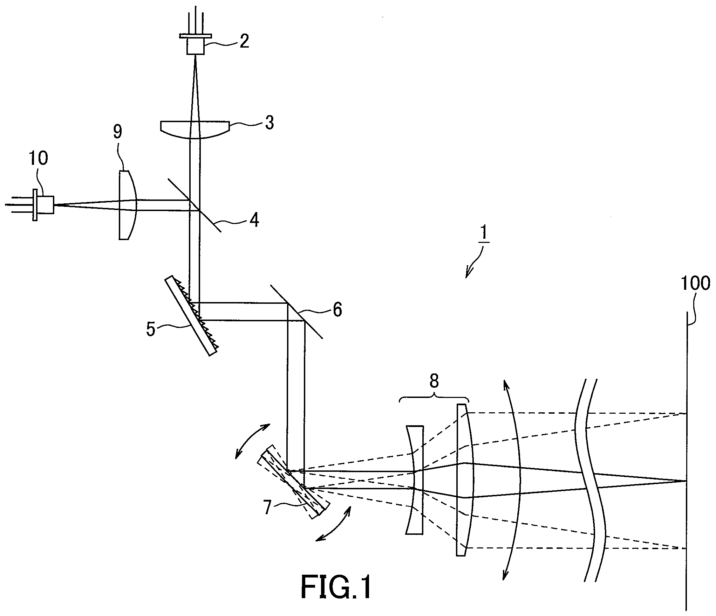

An optical device according to a first embodiment of the present invention will be described with reference to FIGS. 1 to 3. As shown in FIG. 1, an optical device 1 according to the present embodiment includes: a light source 2; a collimator lens 3; a beam splitter 4; a diffraction grating 5; a mirror 6; a MEMS mirror 7; and a light projecting/receiving lens 8; a condenser lens 9; and a light receiving element 10.

The light source 2 as the light emitting unit is constituted by, for example, a laser diode. The light source 2 emits pulsed laser light having a predetermined wavelength.

The collimator lens 3 turns the laser light emitted from the light source 2 into a parallel light beam. The beam splitter 4 outputs the laser light that has been collimated by the collimator lens 3 to the diffraction grating 5, and reflects reflected light of laser light from the object 100 diffracted by the diffraction grating 5 and ambient light such as sunlight (including sunlight reflected by the object 100) toward the condenser lens 9.

The diffraction grating 5 as the first optical member diffracts the laser light incident from the beam splitter 4 to the mirror 6 at a diffraction angle corresponding to the wavelength component of the laser light. Further, the diffraction grating 5 diffracts the reflected light of the laser light and the ambient light incident from the mirror 6 to the beam splitter 4 at a diffraction angle corresponding to the wavelength component of the reflected light of the laser light and the ambient light. That is, the diffraction grating 5 guides the laser light (emitted light) emitted from the light source 2 (light emitting unit) in an angle direction according to the wavelength, and guides the reflected light reflected by the object 100 from the laser light (emitted light) and the ambient light in the direction of the angle corresponding to the wavelength of these lights. The diffraction grating 5 is disposed in an optical path common to the optical path of the laser light and the optical path of the reflected light of the laser light and the ambient light. That is, the diffraction grating 5 guides the emitted light to the irradiation device and guides the reflected light to the light receiving unit by guiding incident light in a direction according to a wavelength thereof. Further, an optical path through which the reflected light enters the first optical member and an optical path through which the emitted light is guided by the first optical member are the same.

Further, in this embodiment, a blazed diffraction grating having a sawtooth groove shape is used as the diffraction grating. Since the diffraction efficiency of +1st order light can theoretically be 100% by the blazed diffraction grating, it is desirable to use a blazed diffraction grating. Further, in the present embodiment, a reflection type diffraction grating is described, but a transmission type diffraction grating may be used.

The mirror 6 reflects the laser light diffracted by the diffraction grating 5 to the MEMS mirror 7, and reflects the reflected light of the laser light and the ambient light reflected by the MEMS mirror 7 to the diffraction grating 5.

The MEMS mirror 7 as the irradiation device scans the laser beam reflected by the mirror 6 in the horizontal direction and the vertical direction toward the region where the object 100 exists. That is, the MEMS mirror 7 irradiates the object 100 with the laser light guided by the diffraction grating 5 (first optical member). Further, the MEMS mirror 7 reflects incident light, which is incident on the light projecting/receiving lens 8, from the light reflected by the object 100 to the mirror 6. The MEMS mirror 7 is a mirror constituted by MEMS (Micro Electro Mechanical Systems), and is driven by an actuator (not shown) formed integrally with the mirror. Further, the MEMS mirror 7 may be other beam deflection means such as a galvanometer mirror or a polygon mirror.

The light projecting/receiving lens 8 irradiates (projects) the laser beam reflected by the MEMS mirror 7 onto a region where the object 100 exists. Further, reflected light that is laser light reflected by the object 100 and ambient light is incident (received) on the light projecting/receiving lens 8 as incident light.

The condenser lens 9 is provided between the beam splitter 4 and the light receiving element 10, and condenses the reflected light of the laser light and the ambient light reflected by the beam splitter 4 onto the light receiving element 10.

The light receiving element 10 as the light receiving unit receives reflected light of the laser light and the ambient light condensed by the condenser lens 9. The light receiving element 10 is composed of, for example, an avalanche photodiode (APD). The light receiving element 10 outputs a signal corresponding to the intensity of received light (received light intensity).

Next, an operation of the optical device 1 having the above-described configuration will be described. First, the laser light emitted from the light source 2 is collimated by the collimator lens 3 and then enters the diffraction grating 5 via the beam splitter 4.

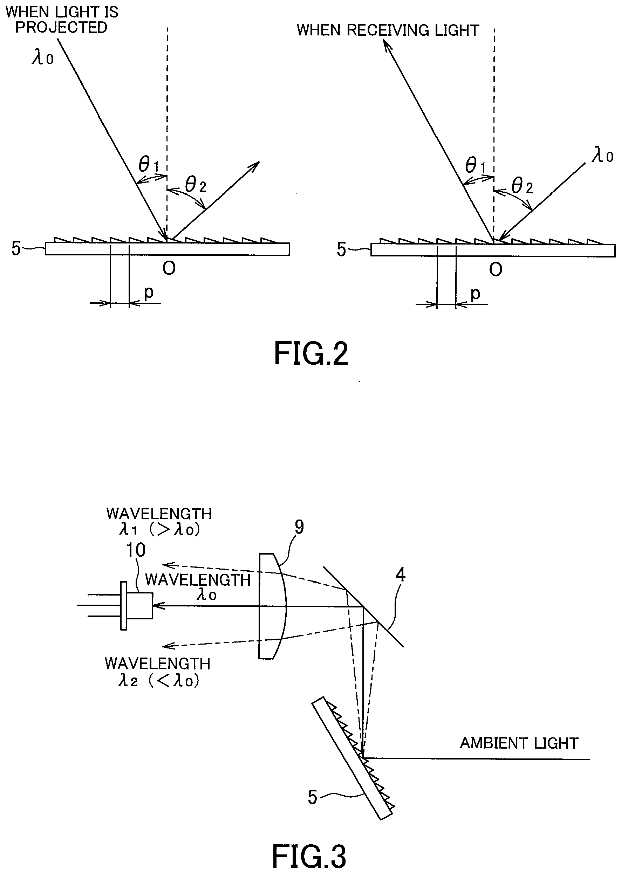

Here, it is known that the diffraction grating 5 diffracts incident light in a predetermined direction uniquely determined by the incident angle and the wavelength of the light, and the groove interval (see "when light is projected" in FIG. 2). If the incident angle of light is $\theta_1$, the wavelength of the light is $\lambda_0$, and the groove interval is p, the diffraction angle $\theta_2$ is expressed by the following equation (1).

$$\theta_2 = \mathrm{Sin}^{-1}\left(\sin\theta_1 + \frac{\lambda_0}{p}\right) \quad \cdots (1)$$

The laser beam emitted in a pulse form from the light source 2 and diffracted by the diffraction grating 5 is reflected by the MEMS mirror 7 and is irradiated toward the outside of the optical device 1 by the light projecting/receiving lens 8. At this time, by changing the angle of the MEMS mirror 7 for each irradiation timing, the position of the beam spot irradiated toward the region where the object 100 exists can be changed temporally, and horizontal and vertical scanning is performed.

Next, an operation at the time of incidence (light receiving system) will be described. The laser light reflected (scattered) by the object 100 is received by the light projecting/receiving lens 8, followed by an optical path opposite to that at the time of light projection, reflected by the MEMS mirror 7, and incident on the diffraction grating 5. At this time, since the incident angle is $\theta_2$ and the direction of incidence is opposite to that at the time of projection, the angle of diffraction is $\theta_1$ (see "when receiving light" in FIG. 2), and the light reaches the beam splitter 4 in the reverse direction of the light path at the time of emission. The reflected light of the laser beam reflected by the beam splitter 4 is condensed to the light receiving element 10 by the condenser lens 9.

The light incident on the light projecting/receiving lens 8 includes not only the reflected light of the projected laser light, but also any light that illuminates the object 100, such as sunlight or light from a streetlight, and the light reflected by the object 100 thereof. These ambient lights also enter the diffraction grating 5 via the MEMS mirror 5 through the light projecting/receiving lens 8. Since the diffraction grating 5 has a different diffracting direction depending on the wavelength of the incident light, the light receiving element 10 receives only the same wavelength component as that of the light source 2 among the light included in the reflected light of the laser light and the ambient light (wavelength $\lambda_0$ in FIG. 3). Therefore, a component having a wavelength different from that of the light source 2 in the ambient light is not received by the light receiving element 10 and can be removed (wavelengths $\lambda_1$ and $\lambda_2$ in FIG. 3).

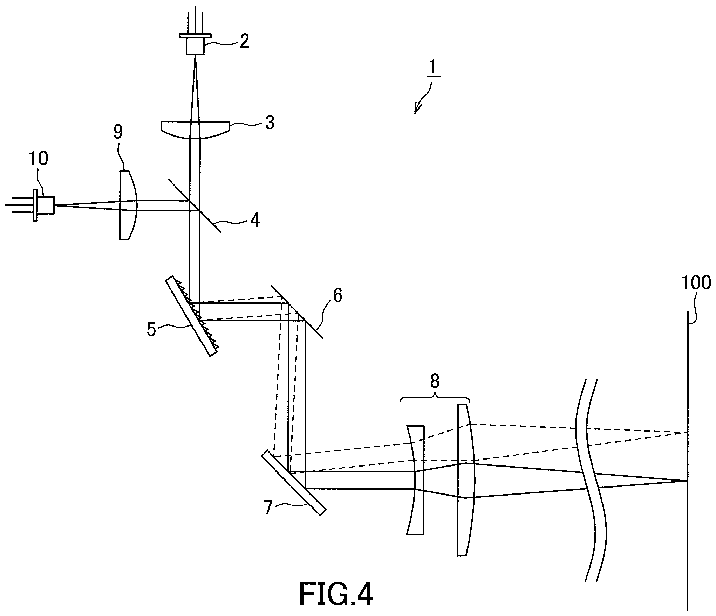

In FIG. 4, the solid line is an example of an optical path before the wavelength variation of the light source 2 occurs, and the broken line is an example of an optical path when a wavelength variation occurs. The laser light emitted from the light source 2 and incident on the diffraction grating 5 is diffracted at a small diffraction angle or a large diffraction angle with respect to an angle before the wavelength change occurs and proceeds as indicated by the broken line. Therefore, as shown in FIG. 4, the light projection position on the object 100 is also shifted by the change in the diffraction angle. The reflected light of the laser beam reflected by the object 100 returns to the reverse direction along the broken line and enters the diffraction grating 5. Since the incident angle to the diffraction grating 5 at this time becomes equal to the diffraction angle at the time of emission, the reflected light of the laser light diffracted by the diffraction grating 5 follows the same optical path as that at the time of emission and reaches the beam splitter 4 to be collected. The light is focused on the light receiving element 10 by the optical lens 9.

In this way, since the optical path from the diffraction grating 5 to the light receiving element 10 is completely the same before and after the wavelength fluctuation, a single light receiving element 10 can receive light even when the laser light has a wavelength fluctuation due to a temperature fluctuation of the light source 2 or the like.

That is, the reflected light of the laser light incident on the optical device 1 enters the diffraction grating 5 at the same angle as the diffraction angle of the diffraction grating 5 of the laser light (emitted light), and is guided to the beam splitter 4 by the diffraction grating 5 at the same angle as the incident angle at which the laser light (emitted light) is incident on the diffraction grating 5.

According to the present embodiment, the optical device 1 includes the diffraction grating 5 that guides the laser light emitted from the light source 2 in the direction with the angle corresponding to the wavelength, and guides the reflected light reflected by the object 100 of the guided laser light and the environmental light in the direction with the angle according to the wavelength of these lights. Furthermore, the optical device 1 includes a light receiving element 10 that receives light guided by the diffraction grating 5. Further, the reflected light of the laser light is incident on the diffraction grating 5 at the same angle as the angle at which the emitted laser light is guided by the diffraction grating 5, and guided by the diffraction grating 5 at the same angle as the angle at which the emitted laser light is incident on the diffraction grating 5. In this way, the reflected light reflected by the object 100 can be guided to the same angle as the incident light to the diffraction grating 5 by the diffraction grating 5. Therefore, even if the wavelength of the laser beam varies due to the temperature variation of the light source 2 or the wavelength of the laser beam is different from that assumed by the solid variation, the reflected light can be guided to the light receiving element 10 by the diffraction grating 5. Therefore, the reflected light of the laser light and the ambient light can be separated, and the separation accuracy can be improved.

Further, the diffraction grating 5 is disposed in an optical path common to the optical path of the laser light and the optical path of the reflected light of the laser light and the ambient light. In this way, in the diffraction grating 5, the reflected light of the laser beam can be returned from the direction with the angle at which the laser beam is guided. Therefore, even if the wavelength of the light source 2 changes, the light can be guided to the light receiving element 10.

Moreover, this optical device can be used for measurement of the distance to the object. That is, by measuring the time from when the light source emits laser light until it is received by the light receiving element as reflected light reflected by the object 100 with the CPU or the like of the distance measuring device equipped with this optical device, the distance from the optical device to the object can be measured.

(Second Embodiment)

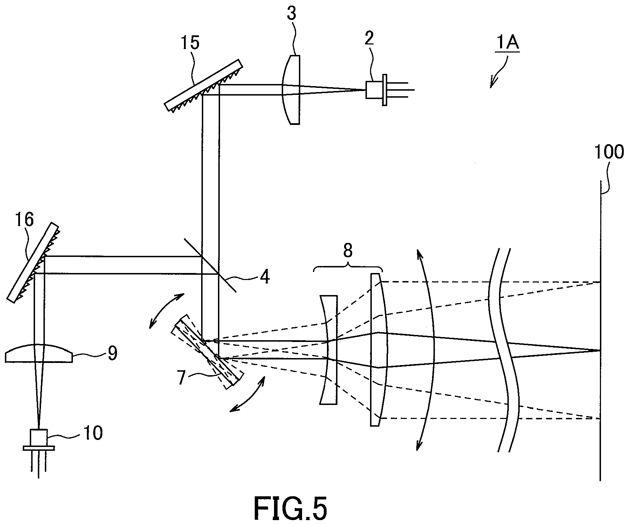

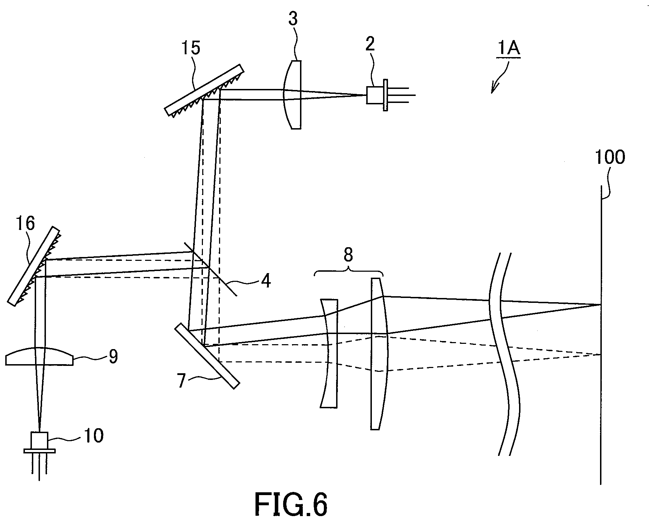

Next, an optical device according to a second embodiment of the present invention will be described with reference to FIGS. 5 and 6. Incidentally, the same components as those in the first embodiment described above are denoted by the same reference signs and description thereof is omitted.

As shown in FIG. 5, the optical device 1A according to the present embodiment includes: a light source 2; a collimator lens 3; a beam splitter 4; a MEMS mirror 7; a light projecting/receiving lens 8; a condenser lens 9; a light receiving element 10; a diffraction grating 15; and a diffraction grating 16.

The light source 2, the collimator lens 3, the beam splitter 4, the MEMS mirror 7, the light projecting/receiving lens 8, the condenser lens 9, and the light receiving element 10 are the same as those in the first embodiment.

In the present embodiment, the diffraction gratings are arranged at two locations. The diffraction grating 15 as the first optical member is disposed between the collimator lens 3 and the beam splitter 4, and the diffraction grating 16 as the second optical member is disposed between the beam splitter 4 and the condenser lens 9. In other words, the diffraction grating 15 is arranged in the optical path at the time of light projection, and guides the emitted light to the irradiation device by guiding the incident light in a direction corresponding to the wavelength. The diffraction grating 16 is disposed in the optical path at the time of light reception, and guides the reflected light to the light receiving element 10 by guiding the reflected light reflected by the object 100 in a direction corresponding to the wavelength. That is, the diffraction gratings 15 and 16 are disposed in different optical paths. Further, the diffraction gratings 15 and 16 have the same optical characteristics such as the groove pitch.

Further, in the present embodiment, the light source 2 and the light receiving element 10 are arranged in a conjugate relationship within the range of wavelength fluctuation. Preferably, two same diffraction gratings are used, and arranged so that the diffraction angle at which the laser light incident on the diffraction grating 15 is diffracted in the direction of the beam splitter 4 is equal to the incident angle from the beam splitter 4 to the diffraction grating 16.

Here, the conjugate relationship originally means that the reflected light of the light emitted from the light source 2 reaches the light receiving element 10 when the angle of the MEMS mirror 7 is not changed between light projection and light reception. However, in actuality, the angle of the MEMS mirror 7 is slightly different between when the laser light is reflected toward the object 100 by the MEMS mirror 7 and when the reflected light of the laser light returns from the object 100. Due to its influence, the condensing position of the reflected light of the laser beam is slightly shifted from the conjugate position. For this reason, the conjugate relationship in the present embodiment includes that arranged in consideration of the size and direction of the slight deviation. The size of the slight deviation can be obtained by determining the position of the light receiving element 10 by the speed of the MEMS mirror, the distance to the object 100, and the optical system through which the reflected light of the laser beam passes. Alternatively, the opening diameter of the light receiving element 10 may be increased in consideration of the shift amount, instead of disposing the light receiving element 10 in a shifted manner.

The laser light emitted in a pulse form from the light source 2 is converted into parallel light by the collimator lens 3, then diffracted by the diffraction grating 15 at a diffraction angle corresponding to the wavelength of the laser light, and after passing through the beam splitter 4, reflected by the MEMS mirror 7, and is emitted toward the outside of the optical device 1A by the light projecting/receiving lens 8. At this time, by changing the angle of the MEMS mirror 7 for each irradiation timing, the position of the beam spot irradiated toward the region where the object 100 exists can be changed temporally, and horizontal and vertical scanning is performed.

The reflected light of the laser light reflected by the object 100 is received by the light projecting/receiving lens 8, reflected by the MEMS mirror 7, reflected by the beam splitter 4, and enters the diffraction grating 16. The reflected light of the laser light diffracted by the diffraction grating 16 is condensed on the light receiving element 10 by the condenser lens 9.

The optical path when the center wavelength of the light source 2 is shifted is as shown by a solid line in FIG. 6. When the diffraction angle by the diffraction grating 15 changes, the reflected light of the laser light reflected by the object 100 enters the diffraction grating 16 at the same angle as the diffraction angle obtained by diffracting the laser light by the diffraction grating 15, and the diffraction angle is in the same direction as before the wavelength changes. As a result, the light can be condensed at the same position of the light receiving element 10.

That is, the reflected light of the laser beam is incident on the diffraction grating 16 at the same angle as the diffraction angle of the diffraction grating 15 from the laser beam (emitted light) emitted from the light source 2, and is guided by the diffraction grating 16 at the same angle as the incident angle at which the laser beam (emitted light) enters the diffraction grating 15.

According to the present embodiment, the light source 2 and the light receiving element 10 are arranged so as to have a conjugate relationship, and the diffraction grating 15 and the diffraction grating 16 are arranged in different optical paths. In this way, the exit angle of the diffraction grating 15 and the incident angle of the diffraction grating 16 become the same, and even if the wavelength of the light source 2 changes, the light can be guided to the light receiving element 10.

Further, in the first and second embodiments described above, the laser light applied to the object 100 has been described as point-like, but it may be linear light with a uniform intensity distribution (that is, a line beam whose light beam cross section is band-shaped light). Such a line beam can be generated by using, for example, a cylindrical lens. Further, the light receiving element when using the line beam may be a line sensor in which a plurality of light receiving elements are arranged in a line along an extending direction of the line beam so that the line beam can be received.

Further, this invention is not limited to the above embodiments. That is, those skilled in the art can implement various modifications in accordance with conventionally known knowledge without departing from the scope of the present invention. Of course, such modifications are included in the scope of the present invention as long as the configuration of the optical device of the present invention is provided.

Reference Signs List

| 1, 1A | Optical device |
|---|---|
| 2 | Light source (light emitting unit) |
| 5 | Diffraction grating (first optical member) |
| 7 | MEMS mirror (irradiation device) |
| 10 | Light receiving element (light receiving unit) |
| 15 | Diffraction grating (first optical member) |
| 15 | Diffraction grating (second optical member) |
| 100 | Object |

**Claims**

1. An optical device comprising:

   a light source that emits emitting light;
   an irradiation device that irradiates the emitted light toward a predetermined range;
   a light receiving unit that receives reflected light reflected from an object by the emitted light irradiated by the irradiation device; and
   a first optical member that guides the emitted light to the irradiation device and guides the reflected light to the light receiving unit by guiding incident light in a direction according to a wavelength thereof.

2. The optical device as claimed in claim 1, wherein the first optical member is disposed on an optical path of the emitted light from the light source to the irradiation device.

3. The optical device as claimed in claim 1, wherein an optical path through which the reflected light enters the first optical member and an optical path through which the emitted light is guided by the first optical member are the same.

4. An optical device comprising:

   a light source that emits emitting light;
   an irradiation device that irradiates the emitted light toward a predetermined range;
   a light receiving unit that receives reflected light reflected from an object by the emitted light irradiated by the irradiation device;
   a first optical member that guides the emitted light to the irradiation device by guiding incident light in a direction according to a wavelength thereof; and
a second optical member that guides the reflected light reflected from the object to the light receiving unit by guiding the reflected light in a direction according to a wavelength thereof.

5. A distance measuring device having the optical device as claimed in any one of claims 1 to 4, wherein the distance measuring device measures a distance to the object based on a time required from emission of the emitted light to reception of the emitted light by the light receiving unit.

FIG.1

WHEN LIGHT IS
PROJECTED

$\lambda_0$

$\theta_1$ $\theta_2$

5

O

p

WHEN RECEIVING LIGHT

$\theta_1$ $\theta_2$

$\lambda_0$

5

O

p

## FIG.2

WAVELENGTH
$\lambda_1$ $(>\lambda_0)$

10

9

WAVELENGTH
$\lambda_0$

4

WAVELENGTH
$\lambda_2$ $(<\lambda_0)$

AMBIENT LIGHT

5

## FIG.3

FIG.4

FIG.5

FIG.6

EP 3 657 216 A1

## INTERNATIONAL SEARCH REPORT

| International application No. |
| --- |
| PCT/JP2018/026031 |

A. CLASSIFICATION OF SUBJECT MATTER
Int.Cl. G01S17/10(2006.01)i, G01C3/06(2006.01)i, G01S7/481(2006.01)i
According to International Patent Classification (IPC) or to both national classification and IPC

B. FIELDS SEARCHED

Minimum documentation searched (classification system followed by classification symbols)
Int.Cl. G01S17/48-G01S7/51, G01S17/00-G01S17/95

Documentation searched other than minimum documentation to the extent that such documents are included in the fields searched
Published examined utility model applications of Japan    1922-1996
Published unexamined utility model applications of Japan    1971-2018
Registered utility model specifications of Japan    1996-2018
Published registered utility model applications of Japan    1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | WO 2015/087564 A1 (MITSUBISHI ELECTRIC CORP.) 18 June 2015, paragraphs [0005], [0012]-[0027], [0040], [0053], [0060], [0072]-[0087], fig. 1-2, 4-6 | 1-3, 5<br>4 |
| Y | JP 2002-071809 A (MITSUBISHI ELECTRIC CORP.) 12 March 2002, paragraphs [0001], [0017]-[0029], fig. 1-6 | 4 |
| A | US 2004/0004746 A1 (RIZA, N. A.) 08 January 2004, paragraphs [0037]-[0039], fig. 1-2 | 1-5 |
| P, X | WO 2018/107237 A1 (BARAJA PTY LTD.) 21 June 2018, page 7, lines 2-14, page 14, line 18 to page 17, line 14, fig. 3, 5-6 | 1-5 |
| P, A | JP 2018-105685 A (HAMAMATSU PHOTONICS K. K.) 05 July 2018, paragraphs [0017]-[0033], fig. 1 | 1-5 |
| A | TAJIMA, J., et al. "3-D DATA ACQUISITION BY RAINBOW RANGE FINDER", PROCEEDINGS, 10TH INTERNATIONAL CONFERENCE ON PATTERN RECOGNITION, 1990, pages 309-313 <DOI:10.1109/ICPR.1990.118121>, section 4 | 1-5 |

☐   Further documents are listed in the continuation of Box C.    ☒   See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>14 September 2018 (14.09.2018) | Date of mailing of the international search report<br>02 October 2018 (02.10.2018) |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

| INTERNATIONAL SEARCH REPORT Information on patent family members | International application No. PCT/JP2018/026031 |
|---|---|

| WO 2015/087564 A1 | 18 June 2015 | US 2016/0291137 A1, paragraphs [0007], [0026]-[0051], [0072], [0092], [0103], [0120]-[0141], fig. 12, 4-6 EP 3081956 A1 CN 105814451 A | 06 October 2016

19 October 2016 27 July 2016 |
| JP 2002-071809 A | 12 March 2002 | (Family: none) | |
| US 2004/0004746 A1 | 08 January 2004 | (Family: none) | |
| WO 2018/107237 A1 | 21 June 2018 | (Family: none) | |
| JP 2018-105685 A | 05 July 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007085832 A